# EUROPEAN PATENT SPECIFICATION

(11) **EP 1 701 462 B1**
(45) Date of publication and mention of the grant of the patent: **06.06.2007**
(21) Application number: 05290507.2
(22) Date of filing: 07.03.2005
(51) Int. Cl.: H04J 14/02

(54) **Wavelength grid for DWDM**
Wellenlängenraster für DWDM
Grille de longueurs d'ondes pour DWDM

(43) Date of publication of application: 13.09.2006
(73) Proprietor: Alcatel Lucent, 75008 Paris (FR)
(72) Inventor: Charlet, Gabriel, 91190 Villiers-Le-Bacle (FR); Mardoyan, Halk, 94140 Alfortville (FR); Tran, Patrice, 9330 Aubervilliers (FR)
(74) Representative: Urlichs, Stefan

(56) References cited:
- WO-A-02/13433
- WO-A1-20/04109958
- "ITU-T RECOMMENDATION G.694.1 (06/2002) "SPECTRAL GRIDS FOR WDM APPLICATIONS: DWDM FREQUENCY GRID"" June 2002 (2002-06), , XP002351892 * the whole document *

## Description

### Field of the Invention

The present invention relates to the field of telecommunications and more particularly to a method of transmitting wavelength multiplexed signals through an optical transport network.

### Background of the Invention

Wavelength Division Multiplexing (WDM) is a technique of combining several optical signals at slightly different wavelengths for the joint transport through an optical transport network. Depending on the bitrate of the optical signals, a minimum channel spacing is required to make sure that all channels can be properly demultiplexed after transmission. As a general rule, the higher the bitrate, the larger is the required channel spacing.

The ITU-T has defined in G.694.1 several wavelength grids with channel spacing of 12,5 GHz, 25 GHz, 50 GHz, and 100 GHz, respectively. The bitrate used in today's WDM transport networks is 10 GBit/s at a channel spacing of 50 GHz. Future transmission networks will make use of 40 GBits/s signals requiring a channel spacing of 100 GHz.

WO 2004/109958 A1 uses the same regular channel spacing and additionally shows in a schematic figure a wavelength band with a nonuniform mix of high and low bandwidth channels, due to which the spacing between adjacent wavelength channels is irregular.

Network elements are required in the transport network to add and drop individual wavelength channels to and from WDM signals, respectively. Such network elements are also known as reconfigurable optical add/drop multiplexers (ROADMs). In principle, a ROADM uses filters or wavelength gratings to extract individual channels and wavelength blockers to switch off dropped channels from the transit signal so that new channels can be added into the wavelength band corresponding to the dropped channel.

Such network elements are designed today for 10 GBit/s at a channel spacing of 50 GHz. With the introduction of 40 GBit/s transmission, all such network elements would have to be replaced or updated to 100 GHz channel spacing, which incurs high costs and is an obstacle for the introduction of 40 GBit/s transmission. It would be very advantageous if old equipment could be reused and 40 Gbit/s could be introduced gradually.

It is thus an object of the invention, to provide a method of transmitting higher bitrate optical wavelength channels over a transport network designed for the transport of lower bitrate optical wavelength channels. Moreover, it is an object of the present invention to provide an network element, which is easily adapted to the transport of lower and higher bitrate optical channels, both.

### Summary of the Invention

These and other objects that appear below are achieved by detuning with respect to the ITU wavelength grid the wavelengths of a higher bitrate WDM signal by at least 30% of the channel spacing of a lower bitrate WDM signal.

In particular, the method provides transmission of a wavelength multiplexed signal carrying higher bitrate wavelength channels having a first channel spacing through an optical transport network designed for the transport of wavelength division multiplexed signals carrying lower bitrate wavelength channels having a second channel spacing and conforming with a predefined wavelength grid. It contains the steps of:
- generating optical signals at wavelengths corresponding to the higher bitrate wavelength channels, wherein the wavelengths are detuned from corresponding wavelengths of the predefined wavelength grid by at least 30% of said second channel spacing and
- combining the optical signals to form the wavelength multiplexed signal for transmission.

With respect to the optical network element, the object is achieved by providing a control means, which configures the optical network element to block two adjacent wavelengths from the predefined ITU wavelength grid to extract one of the optical signals contained in the wavelength multiplexed signal

According to another aspect of the invention, a method is provided for transmitting a wavelength multiplexed signal carrying wavelength channels having a narrower channel spacing through an optical transport network designed for the transport of wavelength division multiplexed signals carrying wavelength channels having a wider channel spacing and conforming with a predefined wavelength grid. The method comprises the steps of:
- generating optical signals at wavelengths corresponding to said narrower channel spacing, wherein said wavelengths are detuned from corresponding wavelengths of said predefined wavelength grid by at least 30% of said narrower channel spacing and
- combining said optical signals to form said wavelength multiplexed signal for transmission.

In this scenario, any two adjacent wavelength channels can be blocked by convention network elements such as ROADMs.

### Brief Description of the Drawings

Preferred embodiments of the invention will be described below with reference to the accompanying drawings, in which figure la shows a predefined wavelength grid for 10 GBit/s transmission;
- figure 1b: shows the wavelength grid as recommended by ITU-T for 40 GBit/s transmission;
- figure 1c: shows an optimized wavelength grid according to the invention;
- figure 2: shows the principle of operation of a reconfigurable optical add/drop multiplexer;
- figure 3a: shows wavelength blocking performed by a reconfigurable optical add/drop multiplexer the in the predefined wavelength grid for 10 GBit/s transmission;
- figure 3b: shows the same wavelength blocking but with a 40 GBit/s channel using the ITU-T wavelength grid;
- figure 3c: shows the same wavelength blocking for a 40 GBit/s channel but using the optimized wavelength grid according to the invention;
- figure 4: shows a measurement curve of a Q-factor using the invention;
- figure 5: shows the impact of wavelength detuning on various wavelengths using the invention,
- figure 6: shows a prior art optical transmission system with transmitter and receiver, and
- figure 7: shows a second aspect of the invention.

### Detailed Description of the Invention

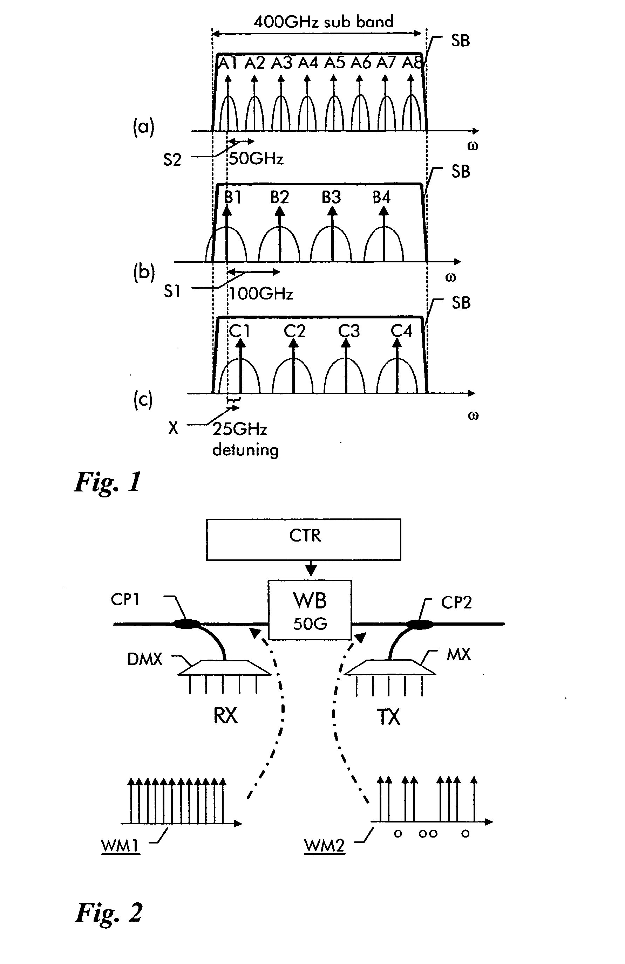

Figure 1a shows an example of a WDM signal in a 400 GHz sub-band SB carrying 8 wavelength channels A1-A8 with 10 GBit/s optical signals. The individual optical signals have due to their modulation with the 10 GBit/s data a certain width. This requires that a 50 GHz spacing S2 is applied to clearly separate the individual channels in the WDM signal.

Figure 1b shows the situation when 4 wavelength channels B1-B4 with 40 GBit/s optical signals are combined at wavelengths that correspond to the ITU-T wavelength grid. Since the individual optical signals are broader than for in the case above due to their higher bitrate modulation, the wavelength spacing S1 between the channels must be larger, i.e., 100 GHz. As another consequence, the resulting WDM signal will not fit entirely into the same sub-band SB. As can be observed, channel B1 reaches out of the sub-band SB at the left end of the wavelength scale.

A basic idea of the invention is therefore, to use for 40 GBit/s signals a wavelength grid which is shifted with respect of the ITU-T wavelength grid. This is shown in figure 1c. The WDM signal contains four wavelength channels C1-C4, which are shifted with respect to the wavelengths of cannels A1, A3, A5, and A7, respectively, by 25 GHz, i.e., by an amount X that corresponds to half of the channel spacing of the 10 GBit/s grid. Due to this detuning, the four optical signals from the four wavelength channels C1-C4 fit perfectly into the 400 GHz sub-band SB.

Figure 2 shows a reconfigurable add/drop multiplexer (ROADM). It contains a first coupler CP1 connected to an incoming line fiber. The main output of the coupler CP1, which acts as a passive optical splitter, is connected to a wavelength blocker WB, while the splitter output of the coupler CP1 is connected to a wavelength demultiplexer DMX. The output of the wavelength blocker WB is connected to a first input of a second optical coupler CP2, a second input of which is connected to a wavelength multiplexer MX. The output of coupler CP2 is connected to an outgoing line fiber. A controller CTR controls the configuration of the wavelength blocker WB.

The signal fraction split off by coupler CP1 is fed to demultiplexer DMX, which separates the individual wavelength channels contained therein, selects those channels that are configured to be dropped, and makes these available at corresponding tributary ports. The transit signal, i.e. the main signal coming from the coupler CP1 still contains these channels to be dropped. This signal is shown schematically as signal WM1 in figure 2. In order to empty these wavelength channels, so that new signals can be added therein, the transit signal is fed to wavelength blocker WB.

A wavelength blocker is a device which is capable of selectively blocking, passing, or attenuating individual channels, while simultaneously passing transit channels with minimal attenuation. A wavelength blocker can be implemented using a plurality of shutters arranged between a demultiplexer and a multiplexer such as described for example in US 6,504,970. As the ROADM is designed for 10 GBit/s transmission, wavelength blocker WB has shutters or "gates" for each 50 GHz wavelength channel. In the present embodiment, four wavelength channels are to be dropped and thus wavelength blocker WB closes the corresponding four gates to block these wavelengths. The resulting transit signal is shown schematically as signal WM2 in figure 2. Multiplexer MX assembles new optical signals at wavelengths which correspond to these blocked wavelengths and adds these via coupler CP2 to the transit signal.

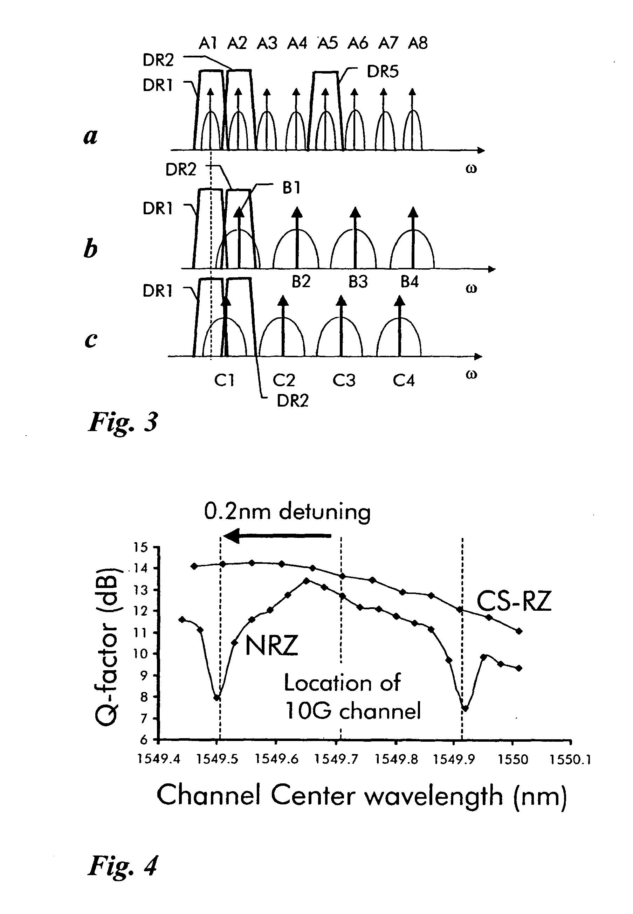

The relation of the wavelength blocker and the wavelength grid is shown in figure 3a. Similar to figure 1a, a WDM signal contains 8 wavelength channels A1-A8 with 10 GBit/s data modulation at a spacing of 50 GHz. Each gate of the wavelength blocker corresponds to a certain bandpass filter. By way of example, three bandpasses DR1, DR2, and DR5 are shown. When these three gates are closed, the corresponding wavelength channels A1, A2, and A5, respectively, will be erased from the WDM signal, while all other channels, i.e., A3, A4, A6, A7, and A8, may pass.

Figure 3b shows the impact of the wavelength blocker on wavelength channels B1-B4 with 40 GBit/s data modulation at a channel spacing of 100 GHz, as defined by ITU-T. Channels B1-B4 correspond in this example to the wavelengths of channels A2, A4, A6, and A8, respectively. Due to the higher bitrate modulation, the optical signals are broader than for 10 GBit/s modulation. Therefore, one bandpass of the wavelength blocker does not attenuate one full wavelength channel. Since the optical signal from one wavelength channel overlaps the corresponding bandpass of the wavelength blocker on both sides, three adjacent gates need to be closed to erase this wavelength signal, but which would affect the neighboring channels, as well. Therefore, use of the ITU-T wavelength grid would necessitate the replacement of all wavelength blockers in the network.

Conversely, figure 3c shows the impact of a wavelength blocker on a WDM signal shifted with respect to the ITU-T grid in a manner as described above. The wavelengths C1-C4 are shifted with respect to the ITU-T grid by 25 GHz. Due to this detuning, the wavelengths lie in the middle between two adjacent bandpasses of the wavelength blocker. Thus by closing for instance gates DR1 and DR2, the complete wavelength signal C1 would be erased from the WDM signal without affecting the neighboring wavelength signal C2. This means that existing wavelength blockers designed for 10 GBit/s transmission can be re-used for 40 GBit/s transmission by simply closing two gates rather than only one per wavelength channel. This enables a smooth transition from 10 GBit/s to 40 GBit/s without need to replace all equipment at once. Moreover, the invention will enable also the use of mixed WDM signals in which 10 GBit/s and 40 GBit/s channels are used in parallel.

Figure 4 shows in a measurement curve for one channel the impact of detuning the wavelength on the performance of the system. The measurement setup uses 10 spans of standard LEAF fiber and two 50 GHz wavelength blockers, which have to be passed by an optical test signals.

The lower curve shows an optical test signal modulated with 40 GBit/s data using a NRZ modulation scheme (non-return-to-zero). A detuning of 25 GHz corresponds to 0,2 nm on the wavelength scale. As can be seen, the Q-factor, which stands for the system performance, is significantly degraded at a shift of 0,2 nm, i.e., when the carrier lies between two gates of the wavelength blocker. A detuning of 0,15 nm (i.e. 30% of the 50 MHz spacing) should be sufficient in this case to achieve at least some of the benefits described above.

The upper curve is a measurement of an optical test signal modulated with 40 GBit/s data using carrier-suppressed (CS-) RZ modulation (return-to-zero). As can be seen from figure 4, when using CS-RZ modulation, a detuning of 0,2 nm does not affect the system performance at all. The slight dependence of the Q-factor from the wavelength is due to power excursion of the channel in the experiment, which could in principle be avoided.

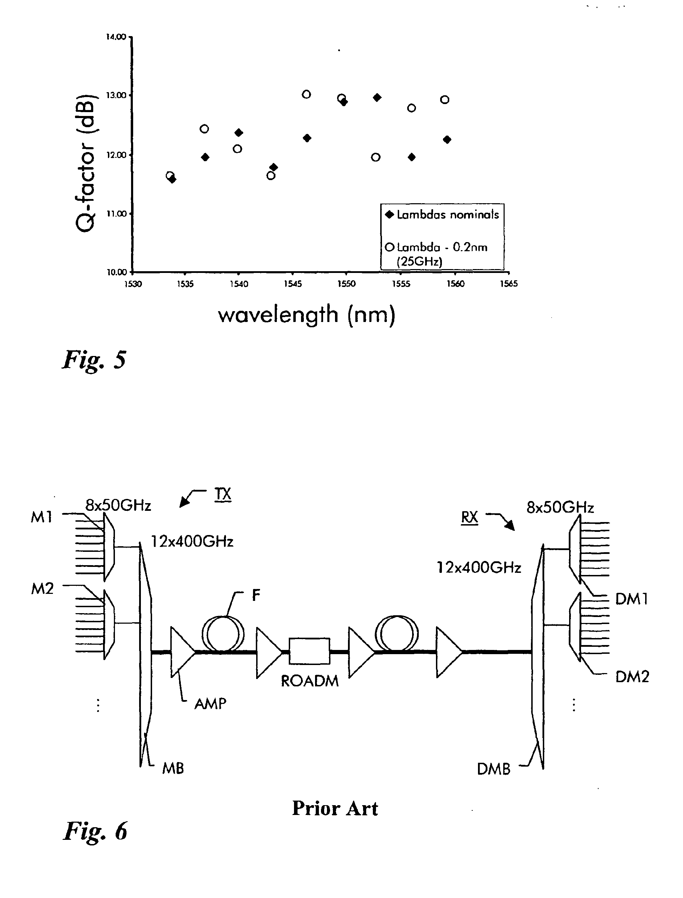

Figure 5 shows the impact of wavelength detuning on the Q-factor for ten wavelength channels using CS-RZ modulation. The black diamonds represent the un-tuned wavelength channels and the open circles stand for the wavelength channels detuned by 0,2 nm. The measurement shows that no significant performance degradation can be observed.

As has been found out, carrier-suppressed modulation schemes such as CS-RZ are preferred over NRZ modulation for the purpose of the invention. Another modulation scheme that will work fine with the invention is DPSK (differential phase shift keying) or RZ-DPSK. It should be understood that carrier-suppressed modulation schemes benefit most from the channel shift according to the invention. For non-carrier-suppressed modulation schemes, the central carrier might just be located on a "dip" between two "pixels" of the wavelength blocker, which leads to a higher insertion loss.

According to the invention 40 GBit/s optical transmitters can now be used in a network system including wavelength blockers designed for 10 GBit/s transmission, provided that their emission wavelength is detuned as described above. In order to make network elements such as ROADs or reconfigurable optical crossconnects, which include wavelength blockers, compatible with the invention, the respective network element's controller that controls the individual gates of the wavelength blocker need to be adapted to close two adjacent gates to block one of the 40 GBits/s optical signals contained in the wavelength multiplexed signal. The controller is typically a programmable device such as a computer workstation, so that the necessary changes can be made by a simple software update. Moreover, the invention affects the transmitter side in a transport network, since the transmitters must be adapted to emit optical signals at the detuned wavelengths, as well as the receiver sie, which must be adapted to demultiplex the detuned wavelength channels.

Figure 6 shows a prior art WDM system using band mux and demux. A transmitter TX comprises a band multiplexer MB, which combines 12 sub-bands of 400 GHz width. Each sub-band comprises 8 wavelength channels at a channel spacing of 50 GHz. For each sub-band, a multiplexer M1, M2, ... is provided. The multiplexed signal comprising 12 x 8 channels is fed to a transmission line, which comprises a number of optical amplifiers AMP and fiber spans F. A receiver RX comprises a band demultiplexer DMB, which splits the received WDM signal up into 12 sub-bands of 400 GHz width. Each sub-band is then transferred to a respective demultiplexer DM1, DM2, ..., which splits the sub-band up into its 8 constituent single wavelength signals at the channel spacing of 50 GHz.

Somewhere in the transmission line, there is a reconfigurable optical add/drop multiplexer of the type as described with reference to figure 2. It should be understood that according to the invention, transmitter TX and receiver RX will be modified to support optical signals at 40 GBit/s bitrate and with a channel spacing of 100 GHz but with the wavelength shift with respect to the 50 GHz wavelength grid as described above.

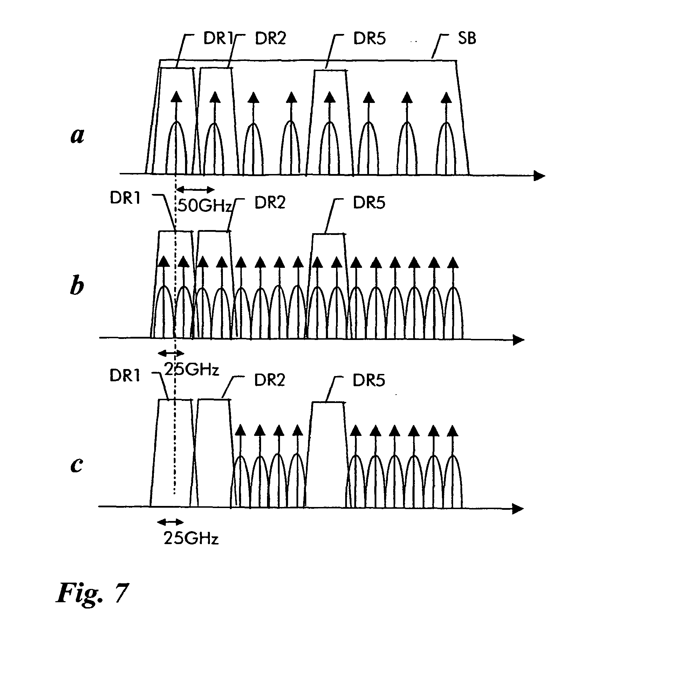

Another aspect of the present invention is shown in figure 7. In figure 7a, the 400 GHz sub-band SB is occupied by 8 conventional 10 GBit/s wavelength channels at a channel spacing of 50 GHz. Figure 7b proposes to use 16 wavelength channels at a channel spacing of 25 GHz, only, but having a wavelength shift of half a channel spacing, i.e., of 12,5 GHz with respect to the ITU wavelength grid.

In this scenario, two channels will be dropped or added per "pixel" of the wavelength blocker. Pixels DR1, DR2, and DR5 of the wavelength blocker are shown in figure 7b, which cover channels 1-4, 9, and 10, respectively, of the 16 channels in the sub-band SB. In figure 7c, these channels are removed from the sub-band SB by the wavelength blocker. In this aspect of the invention, the same basic idea, i.e. wavelength shift of about half the channel spacing, is therefore implemented in a similar context and achieves the same benefits, i.e., use of existing ROADMs for higher bandwidth system (2 x 8 channels instead of 1 x 8 per sub-band).

Instead of a wavelength blocker, a Wavelength Selective Switch (WSS) can equally be used in the context of the invention. A Wavelength Selective Switch (WSS) is a 1 x N device, which has one input and N outputs (often 9). Each input wavelength can be directed to any one of the N output ports. Several wavelengths can also be sent to the same outputs. Output wavelengths can be independently attenuated and blocked.

## Claims

1. A method of transmitting a wavelength multiplexed signal (WM1) carrying higher bitrate wavelength channels (C1-C4) having a wider, regular channel spacing (S1) through an optical transport network designed for the transport of wavelength division multiplexed signals carrying lower bitrate wavelength channels (A1-A8) having a narrower channel spacing (S2) and conforming with a predefined wavelength grid, said method comprising the steps of:
- generating optical signals at wavelengths corresponding to said higher bitrate wavelength channels (C1-C4), wherein said wavelengths are detuned from corresponding wavelengths of said predefined wavelength grid by at least 30% (X) of said narrower channel spacing (S2) and
- combining said optical signals to form said wavelength multiplexed signal (WM1) for transmission.

2. A method according to claim 1, comprising the step of:
- in the transport network extracting at least one of the optical signals contained in said wavelength multiplexed signal (WM1) by blocking the wavelength channel (C1) corresponding to said optical signal to be extracted using a reconfigurable optical add/drop multiplexer, wherein in said reconfigurable optical add/drop multiplexer two adjacent wavelengths (DR1, DR2) from said predefined wavelength grid are blocked.

3. A method according to claim 1, wherein said wavelengths are detuned from corresponding wavelengths of said predefined wavelength grid by 50% of said narrower channel spacing (S2).

4. A method according to claim 1, wherein said optical transport network is designed for transmission of 10 GBit/s data signals at a channel spacing (S2) of 50 GHz and wherein said optical signals to be transported are generated at wavelengths detuned by (X) 25 GHz with respect to said wavelength grid at a channel spacing (S1) of 100 GHz and carry 40 GBit/s data signals.

5. A method according to claim 1, wherein said optical signals are modulated using a carrier-suppressed modulation scheme.

6. A method according to claim 1, wherein said optical signals are modulated using a DPSK-based modulation scheme.

7. A method according to claim 1, wherein said wavelength multiplexed signal (WM1) to be transmitted is a mixed signal comprising at least one of said detuned higher bitrate wavelength channel (C1-C4) and at least one non-detuned lower bitrate wavelength channel (A1-A8).

8. An optical transmission system comprising
- at least one wavelength blocker (WB) or wavelength selective switch for blocking individual wavelengths from a wavelength division multiplexed signal (WM1), wherein the wavelength blocker (WB) or wavelength selective switch is designed for operation with wavelength division multiplexed signals carrying lower bitrate wavelength channels (A1-A8) having a narrower channel spacing (S2) and conforming with a predefined wavelength grid; and
- an optical transmitter for generating a higher bitrate optical signal at a wavelength corresponding to a higher bitrate wavelength channel (C1-C4) of the wavelength division multiplexed signal (WM1) to be transmitted, wherein said higher bitrate wavelength channels (C1-C4) have a wider channel spacing (S1) and wherein said wavelengths are detuned from corresponding wavelengths (A1-A8) of said predefined wavelength grid by at least 30% of said narrower channel spacing (S2).

9. An optical network element comprising a wavelength blocker (WB) or a wavelength selective switch for blocking individual wavelengths from a wavelength division multiplexed signal (WM1) carrying higher bitrate wavelength channels (C1-C4) having a wider channel spacing (S1), wherein the wavelength blocker (WB) or wavelength selective switch is designed for operation with wavelength division multiplexed signals carrying lower bitrate wavelength channels (A1-A8) having a narrower channel spacing (S2) and conforming with a predefined wavelength grid; and a control means (CTR) for controlling said wavelength blocker (WB) or wavelength selective switch which is adapted to configure said wavelength blocker (WB) or wavelength selective switch to block two adjacent wavelengths (DR1, DR2) of said predefined wavelength grid to extract one of said higher bitrate wavelength channels (C1).

10. A method of transmitting a wavelength multiplexed signal carrying wavelength channels having a narrower, regular channel spacing through on optical transport network designed for the transport of wavelength division multiplexed signals carrying wavelength channels having a wider channel spacing and conforming with a predefined wavelength grid, said method comprising the steps of:
- generating optical signals at wavelengths corresponding to said narrower channel spacing, wherein said wavelengths are detuned from corresponding wavelengths of said predefined wavelength grid by at least 30% of said narrower channel spacing and
- combining said optical signals to form said wavelength multiplexed signal for transmission.

11. A method according to claim 10, wherein said wavelength signals have a bitrate of 10 Gbit/s and a channel spacing of 25 GHz, and wherein said wavelengths are detuned from corresponding wavelengths of said predefined wavelength grid by 12,5 GHz.

## Patentansprüche

1. Verfahren zur Übertragung eines Wellenlängen-Multiplexsignals (WM1), das Wellenlängenkanäle höherer Bitrate (C1-C4) mit einem breiteren, gleichmäßigen Kanalabstand (S1) über ein optisches Transportnetz transportiert, das für den Transport von Wellenlängen-Multiplexsignalen mit Wellenlängenkanälen (A1-A8) niedrigerer Bitrate mit einem engeren Kanalabstand (S2) konzipiert wurde und das einem vordefinierten Wellenlängenraster entspricht, wobei das Verfahren folgende Schritte umfasst:
- Erzeugen optischer Signale an Wellenlängen, die diesen Wellenlängenkanälen (C1-C4) mit höherer Bitrate entsprechen, wobei diese Wellenlängen gegenüber den entsprechenden Wellenlängen dieses vordefinierten Wellenlängenrasters um mindestens 30% (X) dieses engeren Kanalabstands (S2) verschoben wurden, und
- Kombinieren dieser optischen Signale zur Bildung dieses Wellenlängen-Multiplexsignals (WM1) für die Übertragung.

2. Verfahren gemäß Anspruch 1, das die folgenden Schritte umfasst:
- im Transportnetzwerk die Extraktion von mindestens einem der in diesem Wellenlängen-Multiplexsignal (WM1) enthaltenen optischen Signale durch Blockieren des Wellenlängenkanals (C1), der diesem zu extrahierenden optischen Signal entspricht, mithilfe eines rekonfigurierbaren optischen Add/Drop-Multiplexers, wobei in diesem rekonfigurierbaren optischen Add/Drop-Multiplexer zwei angrenzende Wellenlängen (DR1, DR2) aus diesem vordefinierten Wellenlängenraster blockiert werden.

3. Verfahren gemäß Anspruch 1, wobei diese Wellenlängen gegenüber den entsprechenden Wellenlängen dieses vordefinierten Wellenlängenrasters um 50% dieses engeren Kanalabstands (S2) verschoben sind.

4. Verfahren gemäß Anspruch 1, wobei dieses optische Transportnetzwerk für die Übertragung von 10-GBit/s-Datensignalen bei einem Kanalabstand (S2) von 50 GHz konzipiert wurde und wobei diese zu transportierenden optischen Signale bei Wellenlängen erzeugt werden, die um (X) 25 GHz in Bezug auf dieses Wellenlängenraster mit einem Kanalabstand (S1) von 100 GHz verschoben sind und wobei diese zu transportierenden optischen Signale 40-GBit/s-Datensignale transportieren.

5. Verfahren gemäß Anspruch 1, wobei diese optischen Signale mithilfe eines Modulationsschemas mit Trägerunterdrückung moduliert werden.

6. Verfahren gemäß Anspruch 1, wobei diese optischen Signale mithilfe eines DPSK-basierten Modulationsschemas moduliert werden.

7. Verfahren gemäß Anspruch 1, wobei dieses zu übertragende Wellenlängen-Multiplexsignal (WM1) ein Mischsignal ist, das mindestens einen dieser verschobenen Wellenlängenkanäle (C1-C4) mit höherer Bitrate und mindestens einen nicht verschobenen Wellenlängenkanal (A1-A8) mit niedrigerer Bitrate umfasst.

8. Optisches Übertragungssystem, das Folgendes umfasst:
- mindestens einen Wellenlängenblocker (WB) oder Wellenlängen-Wahlschalter zum Blockieren einzelner Wellenlängen aus einem Wellenlängen-Multiplexsignal (WM1), wobei der Wellenlängenblocker (WB) bzw. der Wellenlängen-Wahlschalter zum Betrieb mit Wellenlängen-Multiplexsignalen konzipiert wurde, die Wellenlängenkanäle (A1-A8) mit niedrigerer Bitrate transportieren, die einen engeren Kanalabstand (S2) aufweisen und die einem vordefinierten Wellenlängenraster entsprechen; und
- einen optischen Sender zum Erzeugen eines optischen Signals mit einer höheren Bitrate auf einer Wellenlänge, die einem Wellenlängenkanal (C1-C4) mit höherer Bitrate des zu übertragenden Wellenlängen-Multiplexsignals (WM1) entspricht, wobei diese Wellenlängenkanäle (C1-C4) mit höherer Bitrate einen breiteren Kanalabstand (S1) aufweisen und wobei diese Wellenlängen gegenüber den entsprechenden Wellenlängen (A1-A8) dieses vordefinierten Wellenlängenrasters um mindestens 30% dieses engeren Kanalabstands (S2) verschoben sind.

9. Optisches Netzwerkelement, das einen Wellenlängenblocker (WB) oder einen Wellenlängen-Wahlschalter umfasst zum Blockieren einzelner Wellenlängen aus einem Wellenlängen-Multiplexsignal (WM1), das Wellenlängenkanäle (C1-C4) mit höherer Bitrate und einem breiteren Kanalabstand (S1) transportiert,
wobei der Wellenlängenblocker (WB) bzw. der Wellenlängen-Wahlschalter zum Betrieb mit Wellenlängen-Multiplexsignalen konzipiert wurde, die Wellenlängenkanäle (A1-A8) mit niedrigerer Bitrate transportieren, die einen engeren Kanalabstand (S2) aufweisen und die einem vordefinierten Wellenlängenraster entsprechen; und Steuermittel (CTR) zur Steuerung dieses Wellenlängenblockers (WB) bzw. Wellenlängen-Wahlschalters, die so angepasst werden, dass sie diesen Wellenlängenblocker (WB) bzw. Wellenlängen-Wahlschalter so konfigurieren, dass dieser zwei angrenzende Wellenlängen (DR1, DR2) des vordefinierten ITU-Wellenlängenrasters blockiert, um einen dieser Wellenlängenkanäle (C1) mit höherer Bitrate zu extrahieren.

10. Verfahren zur Übertragung eines Wellenlängen-Multiplexsignals, das Wellenlängenkanäle mit einem engeren, gleichmäßigen Kanalabstand über ein optisches Transportnetz transportiert, das für den Transport von Wellenlängen-Multiplexsignalen mit Wellenlängenkanälen mit einem breiteren Kanalabstand konzipiert wurde und das einem vordefinierten Wellenlängenraster entspricht, wobei das Verfahren folgende Schritte umfasst:
- Erzeugen optischer Signale an Wellenlängen, die diesem engeren Kanalabstand entsprechen, wobei diese Wellenlängen gegenüber den entsprechenden Wellenlängen dieses vordefinierten Wellenlängenrasters um mindestens 30% dieses engeren Kanalabstands verschoben wurden, und
- Kombinieren dieser optischen Signale zur Bildung dieses Wellenlängen-Multiplexsignals für die Übertragung.

11. Verfahren gemäß Anspruch 10, wobei diese Wellenlängensignale eine Bitrate von 10 Gbit/s und einen Kanalabstand von 25 GHz aufweisen, und wobei diese Wellenlängen gegenüber den entsprechenden Wellenlängen dieses vordefinierten Wellenlängenrasters um 12,5 GHz verschoben sind.

## Revendications

1. Procédé de transmission d'un signal multiplexé en longueur d'onde (WM1) transportant des canaux de longueur d'onde à un débit binaire supérieur (C1-C4) et ayant un espacement entre canaux régulier plus large (S1) à travers un réseau de transport optique conçu pour le transport de signaux multiplexés par division en longueur d'onde transportant des canaux de longueur d'onde à un débit binaire inférieur (A1-A8) et ayant un espacement entre canaux plus étroit (S2) et conformément à une grille de longueurs d'onde prédéfinie, ledit procédé comprenant les étapes suivantes:
- génération de signaux optiques à des longueurs d'onde correspondant aux dits canaux de longueur d'onde au débit binaire supérieur (C1-C4), lesdites longueurs d'onde étant désaccordées des longueurs d'onde correspondantes de ladite grille de longueurs d'onde prédéfinie d'au moins 30 % (X) dudit espacement entre canaux plus étroit (S2) et
- combinaison desdits signaux optiques pour former le signal multiplexé en longueur d'onde (WM1) en vue de la transmission.

2. Procédé selon la revendication 1, comprenant l'étape suivant:
- dans le réseau de transport, extraction d'au moins l'un des signaux optiques contenus dans ledit signal multiplexé en longueur d'onde (WM1) en bloquant le canal de longueur d'onde (C1) correspondant audit signal optique à extraire en utilisant un multiplexeur d'insertion/extraction optique reconfigurable, deux longueurs d'onde voisines (DR1, DR2) de ladite grille de longueurs d'onde prédéfinie étant bloquées dans ledit multiplexeur d'insertion/extraction optique reconfigurable.

3. Procédé selon la revendication 1, lesdites longueurs d'onde étant désaccordées des longueurs d'onde correspondantes de ladite grille de longueurs d'onde prédéfinie de 50 % dudit espacement entre canaux plus étroit (S2).

4. Procédé selon la revendication 1, ledit réseau de transport optique étant conçu pour la transmission de signaux de données de 10 Gbits/s avec un espacement entre canaux (S2) de 50 GHz et lesdits signaux optiques à transporter étant générés à des longueurs d'onde désaccordées de (X) 25 GHz par rapport à ladite grille de longueurs d'onde avec un espacement entre canaux (S1) de 100 GHz et transportent des signaux de données de 40 Gbits/s.

5. Procédé selon la revendication 1, lesdits signaux optiques étant modulés en utilisant un modèle de modulation à suppression de la porteuse.

6. Procédé selon la revendication 1, lesdits signaux optiques étant modulés en utilisant un modèle de modulation à base de DPSK.

7. Procédé selon la revendication 1, ledit signal multiplexé en longueur d'onde (WM1) à transmettre étant un signal combiné comprenant au moins l'un desdits canaux de longueur d'onde à un débit binaire supérieur désaccordé (C1-C4) et au moins un canal de longueur d'onde à un débit binaire inférieur non désaccordé (A1-A8).

8. Système de transmission optique comprenant :
- au moins un bloqueur de longueur d'onde (WB) ou commutateur à sélection de longueur d'onde pour bloquer des longueurs d'onde individuelles d'un signal multiplexé par répartition en longueur d'onde (WM1), le bloqueur de longueur d'onde (WB) ou commutateur à sélection de longueur d'onde étant conçu pour fonctionner avec des signaux multiplexés par répartition en longueur d'onde transportant des canaux de longueur d'onde à débit binaire inférieur (A1-A8) ayant un espacement entre canaux plus étroit (S2) et conformes à une grille de longueurs d'onde prédéfinie ; et
- un émetteur optique pour générer un signal optique à un débit binaire supérieur à une longueur d'onde correspondant à un canal de longueur d'onde à débit binaire supérieur (C1-C4) du signal multiplexé par répartition en longueur d'onde (WM1) à transmettre, lesdits canaux de longueur d'onde à débit binaire supérieur (C1-C4) ayant un espacement entre canaux plus large (S1) et lesdites longueurs d'onde étant désaccordées par rapport aux longueurs d'onde correspondantes (A1-A8) de ladite grille de longueurs d'onde prédéfinie d'au moins 30 % dudit espacement entre canaux plus étroit (S2).

9. Élément de réseau optique comprenant un bloqueur de longueur d'onde (WB) ou un commutateur à sélection de longueur d'onde pour bloquer des longueurs d'onde individuelles d'un signal multiplexé par répartition en longueur d'onde (WM1) transportant des canaux de longueur d'onde à un débit binaire supérieur (C1-C4) et ayant un espacement entre canaux régulier plus large (S1), le bloqueur de longueur d'onde (WB) ou commutateur à sélection de longueur d'onde étant conçu pour fonctionner avec des signaux multiplexés par répartition en longueur d'onde transportant des canaux de longueur d'onde à débit binaire inférieur (A1-A8) ayant un espacement entre canaux plus étroit (S2) et conformes à une grille de longueurs d'onde prédéfinie; et un moyen de commande (CTR) pour commander ledit bloqueur de longueur d'onde (WB) ou commutateur à sélection de longueur d'onde qui est conçu pour configurer ledit bloqueur de longueur d'onde (WB) ou commutateur à sélection de longueur d'onde pour bloquer deux longueurs d'onde voisines (DR1, DR2) de ladite grille de longueurs d'onde prédéfinie pour extraire l'un desdits canaux de longueur d'onde à débit binaire supérieur (C1).

10. Procédé de transmission d'un signal multiplexé en longueur d'onde transportant des canaux de longueur d'onde ayant un espacement entre canaux régulier plus étroit à travers un réseau de transport optique conçu pour le transport de signaux multiplexés par répartition en longueur d'onde transportant des canaux de longueur d'onde ayant un espacement entre canaux plus large et conforme à une grille de longueurs d'onde prédéfinie, ledit procédé comprenant les étapes suivantes :
génération de signaux optiques à des longueurs d'onde correspondant audit espacement plus étroit entre canaux, lesdites longueurs d'onde étant désaccordées des longueurs d'onde correspondantes de ladite grille de longueurs d'onde prédéfinie d'au moins 30 % dudit espacement plus étroit entre canaux et
- combinaison desdits signaux optiques pour former ledit signal multiplexé en longueur d'onde en vue de la transmission.

11. Procédé selon la revendication 10, lesdits signaux de longueur d'onde ayant un débit binaire de 10 Gbits/s et un espacement entre canaux de 25 GHz et lesdites longueurs d'onde étant désaccordées des dites longueurs d'onde correspondantes de ladite grille de longueurs d'onde prédéfinie de 12,5 GHz.
